(19) Europäisches Patentamt
European Patent Office
Office européen des brevets

(11) EP 2 863 319 A1

(12) EUROPEAN PATENT APPLICATION
published in accordance with Art. 153(4) EPC

(43) Date of publication:
22.04.2015 Bulletin 2015/17

(51) Int Cl.:
G06F 17/00 (2006.01)

(21) Application number: 13805079.4

(22) Date of filing: 01.04.2013

(86) International application number:
PCT/KR2013/002700

(87) International publication number:
WO 2013/187587 (19.12.2013 Gazette 2013/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 13.06.2012 KR 20120063086

(71) Applicant: Postech Academy-Industry Foundation
Pohang-si, Gyeongsangbuk-do 790-784 (KR)

(72) Inventors:
• YU, Hwan Jo
Pohang-si
Gyeongsangbuk-do 790-751 (KR)
• OH, Jin Oh
Pohang-si
Gyeongsangbuk-do 790-784 (KR)

(74) Representative: Zimmermann, Tankred Klaus
Schoppe, Zimmermann, Stöckeler
Zinkler, Schenk & Partner mbB
Patentanwälte
Radlkoferstrasse 2
81373 München (DE)

(54) **DATA SAMPLING METHOD AND DATA SAMPLING DEVICE**

(57) A data sampling method and data sampling device are disclosed. One embodiment of the present invention comprises the steps of: generating a model of interest to which a user's interest is reflected on the basis of raw data; and determining a sampling model according to a result of comparing the model of interest with models sampled on the basis of the raw data. According to the present invention, a sampling model to which the user's interest is reflected can be quickly and easily acquired.

FIG. 1

**Description**

[Technical Field]

The present invention relates to data sampling, and more particularly, to a data sampling method for sampling data desired by a user from raw data.

[Background Art]

Sampling is a fundamental technique for data processing and data mining, and the main purpose thereof is to reduce the size of a target data set while maintaining characteristics of a raw data set. In this way, by reducing the size of a target data set, it is possible to reduce the cost of calculation in various applications. Also, use of an appropriate sampling technique may result in additional effects, such as an improvement in the performance of an application for data analysis and data gathering and a reduction in cost, and may provide solutions to a rare-class problem, the problem of network traffic interference, and so on.

Since it is difficult to develop a sampling method in which various users' interests are generalized, sampling methods have been separately developed according to particular problems and particular users' interests. Due to the absence of a framework generalized for sampling, researchers carry out repetitive tasks to develop a sampling method and verify the developed sampling method, and inefficiency in such a development of a sampling method makes it difficult to develop an appropriate sampling method.

[Disclosure]

[Technical Problem]

The present invention is directed to providing a data sampling method for acquiring sampling results reflecting a user's interest.

The present invention is also directed to providing a data sampling apparatus for acquiring sampling results reflecting a user's interest.

[Technical Solution]

One aspect of the present invention provides a method of sampling data performed by a data sampling apparatus including: generating an interest model reflecting an interest of a user based on raw data; and determining a sampling model according to results obtained by comparing models sampled based on the raw data with the interest model.

Here, the generating of the interest model may include: classifying elements included in the raw data into a plurality of data groups based on the interest of the user; calculating weights of the plurality of data groups according to a ratio between at least one element included in each of the plurality of data groups and at least one element included in another of the data groups; changing the data groups into nodes defined according to the interest of the user; and calculating distances between the plurality of nodes.

Here, the determining of the sampling model may include: generating a plurality of comparison models based on the elements included in the raw data; calculating distances between the interest model and the plurality of comparison models; and determining a comparison model having a distance meeting a previously defined standard among the calculated distances as the sampling model.

Here, the generating of the plurality of comparison models may include: classifying the elements included in the raw data into the plurality of data groups for the interest model; generating a plurality of comparison data groups based on at least one element included in the plurality of data groups; changing the comparison data groups into comparison nodes defined according to the interest of the user; calculating weights of the plurality of comparison nodes according to a ratio between at least one element included in each of the plurality of comparison nodes and at least one element included in another of the comparison nodes; and calculating distances between the plurality of comparison nodes.

Another aspect of the present invention provides an apparatus for sampling data including: a first generator configured to generate an interest model reflecting an interest of a user based on raw data; a second generator configured to generate a plurality of comparison models based on elements included in the raw data; and a determiner configured to determine a sampling model according to results obtained by comparing the interest model with the plurality of comparison models.

Here, the first generator may classify the elements included in the raw data into a plurality of data groups based on the interest of the user, calculate weights of the plurality of data groups according to a ratio between at least one element included in each of the plurality of data groups and at least one element included in another of the data groups, change the data groups into nodes defined according to the interest of the user, and calculate distances between the plurality of nodes.

Here, the second generator may classify the elements included in the raw data into the plurality of data groups for the interest model, generate a plurality of comparison data groups based on at least one element included in the plurality of data groups, change the comparison data groups into comparison nodes defined according to the interest of the user, calculate weights of the plurality of comparison nodes according to a ratio between at least one element included in each of the plurality of comparison nodes and at least one element included in another of the comparison nodes, and calculate distances between the plurality of comparison nodes.

Here, the determiner may calculate distances between the interest model and the plurality of comparison models, and determine a comparison model having a distance meeting a previously defined standard among the calculated distances as the sampling model.

[Advantageous Effects]

According to the present invention, an interest model is generated based on an interest of a user, and a sampling model is determined according to results obtained by comparing models sampled based on the raw data with the interest model. Therefore, it is possible to rapidly acquire a sampling model reflecting the interest of the user with ease.

[Description of Drawings]

FIG. 1 is a flowchart illustrating a method of sampling data according to an exemplary embodiment of the present invention.

FIG. 2 is a flowchart illustrating an operation of generating an interest model in FIG. 1.

FIG. 3 is a flowchart illustrating an operation of determining a sampling model in FIG. 1.

FIG. 4 shows graphs of results obtained by classifying raw data into a plurality of data groups and sampling results according to the classification.

FIG. 5 shows conceptual diagrams of interest models generated by a method of sampling data according to an exemplary embodiment of the present invention.

FIG. 6 shows conceptual diagrams of examples of an interest model (or a comparison model).

FIG. 7 shows conceptual diagrams of sampling results according to sampling methods.

FIG. 8 is a conceptual diagram showing differences between raw data and sampling results according to sampling methods.

FIG. 9 shows graphs of a change in sampling quality according to sample size.

FIG. 10 is a block diagram of an apparatus for sampling data according to an exemplary embodiment of the present invention.

[Modes of the Invention]

While the present invention is susceptible to various modifications and alternative forms, particular embodiments are shown by way of example in the drawings and described in detail.

It should be understood, however, that the description is not intended to limit the present invention to the specific embodiments, but, on the contrary, the present invention is to cover all modifications, equivalents, and alternatives that fall within the spirit and scope of the present invention.

Although the terms "first," "second," etc. may be used herein in reference to various elements, such elements should not be construed as being limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present invention pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, exemplary embodiments of the present invention will be described in detail with reference to the accompanying drawings. To facilitate overall understanding of the present invention, like numbers refer to like elements throughout the drawings, and the description of the same component will not be reiterated.

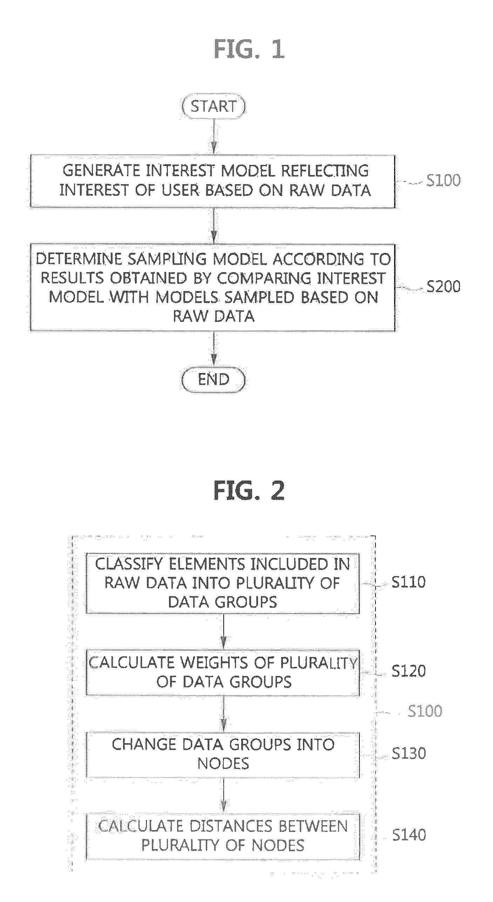

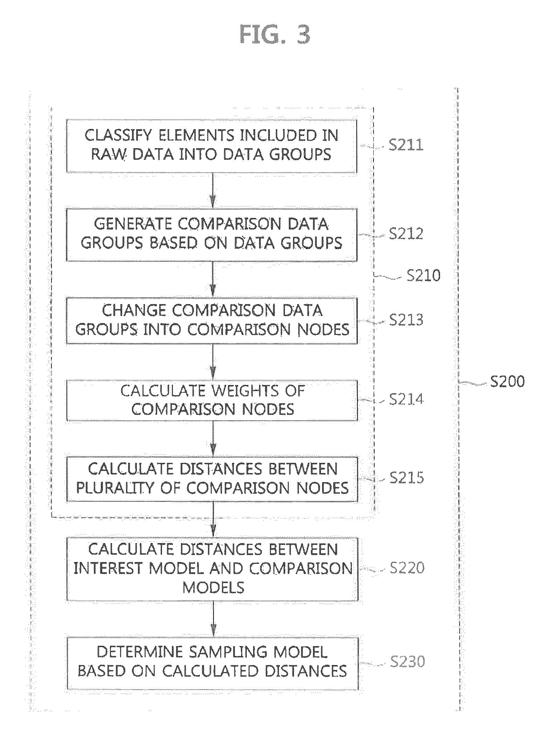

FIG. 1 is a flowchart illustrating a method of sampling data according to an exemplary embodiment of the present invention. FIG. 2 is a flowchart illustrating an operation of generating an interest model in FIG. 1, and FIG. 3 is a flowchart illustrating an operation of determining a sampling model in FIG. 1.

Referring to FIGS. 1 to 3, the method of sampling data according to an exemplary embodiment of the present invention includes an operation of generating an interest model reflecting an interest of a user based on raw data (S100), and an operation of determining a sampling model according to results obtained by comparing models sampled based on the raw data with the interest model (S200).

In connection with class-based stratified sampling (referred to as "case 1" below), quadrant-based stratified sampling (referred to as "case 2" below), under or over-sampling to balance two classes (referred to as "case 3" below), and traffic-preserving trajectory sampling (referred to as "case 4" below), the method of sampling data according to an exemplary embodiment of the present invention will be described in detail below. Here, the method of sampling data according to an exemplary embodiment of the present invention may be performed by an apparatus for sampling data.

Operation S100 may include operation S110, operation S120, operation S130, and operation S140, and operation S200 may include operation S210, operation S220, and operation S230. Also, operation S210 may include operation S211, operation S212, operation S213, operation S214, and operation S215.

The apparatus for sampling data may classify elements included in raw data into a plurality of data groups (S110).

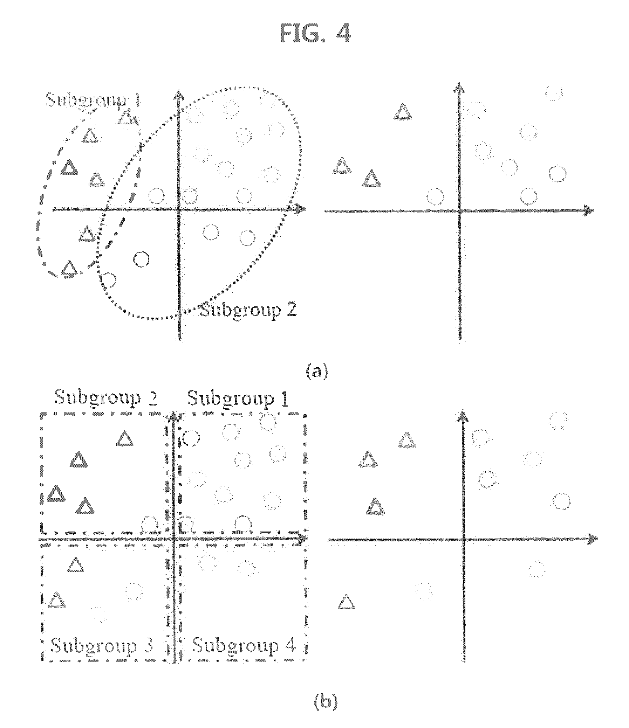

In case 1, the interest of the user is a ratio of a data type, and thus the apparatus for sampling data may classify elements of the same type into one data group. Referring to FIG. 4(a), the apparatus for sampling data may classify the raw data into a plurality of data groups according to data types (see the left graph of FIG. 4(a)). In other words, the apparatus for sampling data may classify triangular elements into one data group because the triangular elements correspond to the same type, and may classify circular elements into another data group because the circular elements correspond to the same type.

In case 2, the interest of the user are ratios of data included in the quadrants, and thus the apparatus for sampling data may classify elements included in the same quadrant into one data group. Referring to FIG. 4(b), the apparatus for sampling data may classify the raw data into a plurality of data groups according to quadrants in which the data is positioned (see the left graph of FIG. 4(b)). In other words, the apparatus for sampling data may classify elements included in the first quadrant into one data group, elements included in the second quadrant into another data group, elements included in the third quadrant into still another data group, and elements included in the fourth quadrant into yet another data group.

The right graph of FIG. 4(a) shows sampling results generated based on the plurality of data groups classified according to data types such as in the left graph shown in FIG. 4(a), whereas the right graph of FIG. 4(b) shows sampling results generated based on the plurality of data groups classified according to quadrants in which data is positioned such as in the left graph shown in FIG. 4(b). From such sampling results, it is possible to see that sampling results vary according to the interest of the user.

In case 3, the interest of the user is a ratio of a data type, and thus the apparatus for sampling data may classify the raw data into a plurality of data groups according to data types (see the left graph of FIG. 4(a)).

In case 4, the interest of the user is a traffic ratio at a specific point in space-time, and thus the apparatus for sampling data may classify traffic at the specific point in space-time into a data group. Here, space-time may be defined by latitude, longitude, and time.

After classifying the elements included in the raw data into a plurality of data groups, the apparatus for sampling data may calculate the weights of the plurality of data groups according to a ratio between at least one element included in each of the plurality of data groups and at least one element included in another of the data groups (S 120).

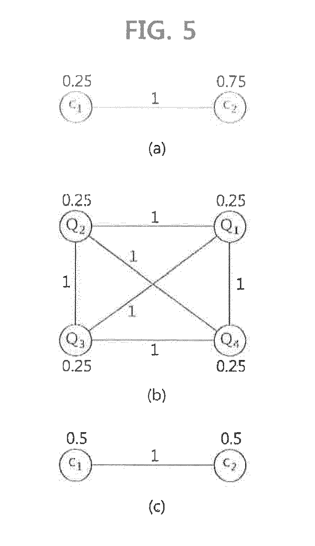

A method of calculating the weights of a plurality of data groups will be described with reference to FIG. 5 assuming that 400 elements are included in raw data and the weights of all the data groups total 1.

Case 1 is characterized by preserving a ratio of a data type. Therefore, when 100 elements are included in one data group $C_1$ and 300 elements are included in another data group $C_2$, the apparatus for sampling data may express the weights of the plurality of data groups as "$C_1 = 0.25$" and "$C_2 = 0.75$" (i.e., $C_1 = 100/400$, and $C_2 = 300/400$) as shown in FIG. 5(a).

Case 2 is characterized by preserving ratios of data included in quadrants. Therefore, when 100 elements are included in one data group $Q_1$, 100 elements are included in another data group $Q_2$, 100 elements are included in still another data group $Q_3$, and 100 elements are included in yet another data group $Q_4$, the apparatus for sampling data may express the weights of the plurality of data groups as "$Q_1$ = 0.25," "$Q_2$ = 0.25," "$Q_3$ = 0.25," and "$Q_4$ = 0.25" (i.e., $Q_1$ = 100/400, $Q_2$ = 100/400, $Q_3$ = 100/400, and $Q_4$ = 100/400) as shown in FIG. 5(b).

Case 3 is characterized by preserving identical ratios of data types. Therefore, the apparatus for sampling data may express the weights of the plurality of data groups as "$C_1$ = 0.5" and "$C_2$ = 0.5" regardless of the number of elements included in a data group as shown in FIG. 5(c). In other words, it is possible to equalize the weights of the plurality of data groups.

Case 4 is characterized by preserving a traffic ratio. Therefore, the apparatus for sampling data may express the weights of the data groups as ratios of traffic normalized at specific points in space-time.

After calculating the weights of the plurality of data groups, the apparatus for sampling data may change the data groups into nodes defined based on the interest of the user (S130). Here, a node denotes one point, and the changing of a data group into a node may be regarded as the generalization of the data group including at least one element into one node (i.e., changing FIG. 4(a) into FIG. 5(a), and changing FIG. 4(b) into FIG. 5(b)).

In case 1, a node denotes a data type, and the apparatus for sampling data may change one data group classified according to data type into one node (see the graph shown in FIG. 4(a), and FIG. 5(a)).

In case 2, a node denotes a quadrant, and the apparatus for sampling data may change one data group classified according to a quadrant into one node (see the graph shown in FIG. 4(b), and FIG. 5(b)).

In case 3, a node denotes a data type, and the apparatus for sampling data may change one data group classified according to data type into one node (see the graphs shown in FIG. 4(a), and FIG. 5(a)).

In case 4, a trajectory relates to various points at different times, and thus a node is a specific point in space-time. Therefore, the apparatus for sampling data may change one data group classified according to a specific point in space-time into one node.

After changing the data groups into the nodes defined based on the interest of the user, the apparatus for sampling data may calculate distances between the nodes (S140).

In case 1, distances between nodes has no meaning and thus may have the same length (e.g., 1) as shown in the diagram of FIG. 5(a). However, when distances between nodes differ from each other, the distances between the nodes may have different lengths. For example, when the distance between node 1 and node 2 is longer than the distance between node 2 and node 1, the distances between the nodes may have different lengths.

In case 2, the apparatus for sampling data may calculate lengths between nodes of quadrants, and the calculated lengths between the nodes may be expressed as shown in the diagram of FIG. 5(b).

In case 3, distances between nodes have no meaning such as in case 1 and thus may be expressed as shown in the diagram of FIG. 5(c).

In case 4, a node is a specific point in space-time, and a distance between nodes may be calculated using Expression 1 below.

[Expression 1]

$$D(p, q) = \sqrt{(p_x - q_x)^2 + (p_y - q_y)^2 + (p_t - q_t)^2}$$

Here, D(p, q) denotes the distance between node p and node q, $p_x$ denotes a latitude at node p, $p_y$ denotes a longitude at node p, $p_t$ denotes a time at node p, $q_x$ denotes a latitude at node q, $q_y$ denotes a longitude at node q, and $q_t$ denotes a time at node q.

As described above, the apparatus for sampling data may generate an interest model through operation S110, operation S120, operation S130, and operation S140.

After generating the interest model reflecting the interest of the user, the apparatus for sampling data may generate a plurality of comparison models based on the elements included in the raw data (S210).

The apparatus for sampling data may classify the elements included in the raw data into the plurality of data groups for the interest model (S211).

In case 1, the interest of the user is a ratio of a data type, and thus the apparatus for sampling data may classify elements of the same type into one data group. Referring to FIG. 4(a), the apparatus for sampling data may classify the raw data into a plurality of data groups according to data types (see the left graph of FIG. 4(a)). In other words, the apparatus for sampling data may classify triangular elements into one data group because the triangular elements correspond to the same type, and may classify circular elements into another data group because the circular elements correspond to the same type.

In case 2, the interest of the user are ratios of data included in quadrants, and thus the apparatus for sampling data may classify elements included in the same quadrant into one data group. Referring to FIG. 4(b), the apparatus for sampling data may classify the raw data into a plurality of data groups according to quadrants in which the data is positioned (see the left graph of FIG. 4(b)). In other words, the apparatus for sampling data may classify elements included in the first quadrant into one data group, elements included in the second quadrant into another data group, elements included in the third quadrant into still another data group, and elements included in the fourth quadrant into yet another data group.

In case 3, the interest of the user is a ratio of a data type, and thus the apparatus for sampling data may classify the raw data into a plurality of data groups according to data types (see the left graph of FIG. 4(a)).

In case 4, the interest of the user is a traffic ratio at a specific point in space-time, and thus the apparatus for sampling data may classify traffic at the specific point in space-time into a data group. Here, space-time may be defined by latitude, longitude, and time.

After classifying the elements included in the raw data into a plurality of data groups, the apparatus for sampling data may generate a plurality of comparison data groups based on at least one element included in the plurality of data groups (S212). In other words, the apparatus for sampling data may select some elements included in a data group and generate a comparison data group based on the selected elements.

After generating the plurality of comparison data groups, it is possible to change the comparison data groups into comparison nodes defined according to the interest of the user (S213).

In case 1, a node denotes a data type, and the apparatus for sampling data may change some elements selected from one data group classified according to data type into one comparison node (see the graph shown in FIG. 4(a), and FIG. 5(a)).

In case 2, a node denotes a quadrant, and the apparatus for sampling data may change some elements selected from one data group classified according to a quadrant into one comparison node (see the graph shown in FIG. 4(b), and FIG. 5(b)).

In case 3, a node denotes a data type, and the apparatus for sampling data may change some elements selected from one data group classified according to data type into one comparison node (see the graph shown in FIG. 4(a), and FIG. 5(c)).

In case 4, a trajectory relates to various points at different times, and thus a node is a specific point in space-time. Therefore, the apparatus for sampling data may change some elements selected from one data group classified according to a specific point in space-time into one comparison node.

After changing the comparison data groups into the comparison nodes, the apparatus for sampling data may calculate the weights of the plurality of comparison nodes according to a ratio between at least one element included in each of the plurality of comparison nodes and at least one element included in another of the comparison nodes (S214).

Case 1 is characterized by preserving a ratio of a data type. Therefore, when 100 elements are included in one comparison node $C_1$ and 300 elements are included in another comparison node $C_2$, the apparatus for sampling data may express the weights of the plurality of comparison nodes as "$C_1 = 0.25$" and "$C_2 = 0.75$" as shown in FIG. 5(a).

Case 2 is characterized by preserving ratios of data included in quadrants. Therefore, when 100 elements are included in one comparison node $Q_1$, 100 elements are included in another comparison node $Q_2$, 100 elements are included in still another comparison node $Q_3$, and 100 elements are included in yet another comparison node $Q_4$, the apparatus for sampling data may express the weights of the plurality of comparison nodes as "$Q_1 = 0.25$," "$Q_2 = 0.25$," "$Q_3 = 0.25$," and "$Q_4 = 0.25$" as shown in FIG. 5(b).

Case 3 is characterized by preserving identical ratios of data types. Therefore, the apparatus for sampling data may express the weights of the plurality of data groups as "$C_1 = 0.5$" and "$C_2 = 0.5$" regardless of the number of elements included in a comparison node as shown in FIG. 5(c).

Case 4 is characterized by preserving a traffic ratio. Therefore, the apparatus for sampling data may express the weights of the plurality of comparison nodes as ratios of traffic normalized at specific points in space-time.

After calculating the weights of the comparison nodes according to ratios of elements included in the comparison nodes, the apparatus for sampling data may calculate distances between the plurality of comparison nodes (S215).

In case 1, distances between comparison nodes have no meaning and thus may have the same length (e.g., 1) as shown in the diagram of FIG. 5(a). However, when distances between comparison nodes differ from each other, the distances between the comparison nodes may have different lengths.

In case 2, the apparatus for sampling data may calculate lengths between comparison nodes of quadrants, and the calculated lengths between the comparison nodes may be expressed as shown in the diagram of FIG. 5(b).

In case 3, distances between comparison nodes have no meaning such as in case 1 and thus may be expressed as shown in the diagram of FIG. 5(c).

In case 4, a comparison node is a specific point in space-time, and distances between comparison nodes may be calculated using Expression 1 described above.

As described above, the apparatus for sampling data may generate the comparison models through operation S211, operation S212, operation S213, and operation S214 described above.

After generating the comparison models, the apparatus for sampling data may calculate distances between the interest model and the comparison models (S220).

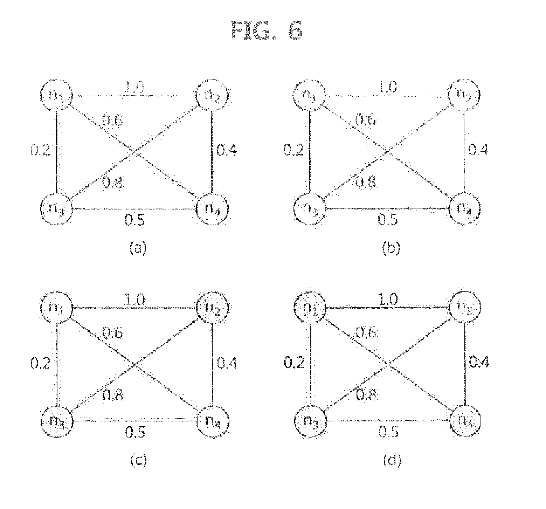

With reference to FIG. 6, a method of calculating the distances between interest models and comparison models will be described in detail below.

FIG. 6 shows conceptual diagrams of examples of an interest model in which numbers shown at lines connecting nodes to each other denote distances between the nodes, and patterns in the nodes denote the weights of the nodes. In other words, a node with a checkered pattern has a weight of 0.5, a node with a dotted pattern has a weight of 0.25, and a node with no pattern has a weight of 0.

The distance between two interest models (or between an interest model and a comparison model) may be defined according to a weight difference and a distance between nodes. Intuitively looking at models shown in FIG. 6, it is possible to see that the distance between a model shown in FIG. 6(a) and a model shown in FIG. 6(b) is shorter (i.e., more similar) than the distance between the model shown in FIG. 6(a) and a model shown in FIG. 6(c) because node $n_1$ of the model shown in FIG. 6(a) and node $n_1$ of the model shown in FIG. 6(b) have the same weight and node $n_2$ of the model shown in FIG. 6(a) and node $n_2$ of the model shown in FIG. 6(b) have similar weights.

In other words, it is possible to see that the weights of corresponding nodes between interest models (or between an interest model and a comparison model) are a factor in measuring the distance between the interest models (or between the interest model and the comparison model).

Meanwhile, in the models shown in FIGS. 6(a), 6(c), and 6(d), the numbers of nodes having the same weight are identical to each other. Specifically, node $n_2$ of the model shown in FIG. 6(a) and node $n_2$ of the model shown in FIG. 6(c) have the same weight, and node $n_1$ of the model shown in FIG. 6(a) and node $n_1$ of the model shown in FIG. 6(d) have the same weight.

In this case, a distance between nodes may be significantly taken into consideration to measure the distance between interest models (or between an interest model and a comparison model). In other words, from the models shown in FIGS. 6(a), 6(c), and 6(d), it is possible to see that the distance between the model shown in FIG. 6(a) and the model shown in FIG. 6(c) is shorter (i.e., more similar) than the distance between the model shown in FIG. 6(a) and a model shown in FIG. 6(d) because the distance between node $n_1$ and node $n_3$ is shorter than that between node $n_2$ and node $n_4$, This is because the workload required to exchange node $n_1$ with node $n_3$ is less than that required to exchange node $n_2$ with node $n_4$.

As described above, a problem of calculating the distance between models may be regarded as a problem of exchanging nodes.

Therefore, it is possible to calculate the distance between an interest model and a comparison model using an earth mover's distance (EMD) in an exemplary embodiment of the present invention.

An EMD may be expressed as Expression 2, Expression 3, and Expression 4 below.

[Expression 2]

$$WORK(S^+, S^-, F) = \sum_{i=1}^{m} \sum_{j=1}^{n} f_{ij} d_{ij}$$

Here, $S^+$ denotes a source defined in a graph consisting of nodes $\{n_1, ..., n_k\}$ (i.e., may be regarded as an interest model in an exemplary embodiment of the present invention), and $S^-$ denotes a sink defined in a graph consisting of the nodes $\{n_1, ..., n_k\}$ (i.e., may be regarded as a comparison model in an exemplary embodiment of the present invention). Therefore, $S^+$ may be expressed as "$S^+ = \{(n_1, w_1^+), ..., (n_k, w_k^+)\}$," and $S^-$ may be expressed as "$S^- = \{(n_1, w_1^-), ..., (n_k, w_k^-)\}$." $w_k^+$ denotes a weight at the corresponding node of the source, and $w_k^-$ denotes a weight at the corresponding node of the sink. Also, $WORK(S^+, S^-, F)$ denotes the workload required to make $S^-$ similar to or identical to $S^+$.

In Expression 2, $f_{ij}$ and $d_{ij}$ may be defined as Expression 3 below.

[Expression 3]

$$f_{ij} \geq 0, \quad 1 \leq i,j \leq k$$

$$\sum_{j=1}^{k} f_{ij} \leq w_i^+ \quad, \quad 1 \leq i \leq k$$

$$\sum_{i=1}^{k} f_{ij} \leq w_j^- \quad, \quad 1 \leq j \leq k$$

$$\sum_{i=1}^{k}\sum_{j=1}^{k} f_{ij} = \min \left( \sum_{i=1}^{k} w_i^+, \sum_{j=1}^{k} w_j^- \right)$$

Here, $f_{ij}$ denotes the amount of movement from node $n_1$ to node $n_j$, $d_{ij}$ denotes the distance from node $n_i$ to node $n_j$, and F is a matrix representing $f_{ij}$ (i.e., F = [$f_{ij}$]).

Using Expression 4 below, which is defined based on Expression 2 and Expression 3 described above, it is possible to calculate the minimum workload.

[Expression 4]

$$D_{EMD}(S^+, S^-) = \min_F WORK(S^+, S^-, F)$$

Using Expression 4, it is possible to measure the distances between models shown in FIG. 6.

[Expression 5]

$$D_{EMD}(A, B) = 0.25 \cdot 0.4 = 0.1$$
$$D_{EMD}(A, C) = 0.5 \cdot 0.2 = 0.1$$
$$D_{EMD}(A, D) = 0.5 \cdot 0.4 = 0.2$$

Here, it is assumed that the model shown in FIG. 6(a) is A that is an interest model, the model shown in FIG. 6(b) is B that is a comparison model, the model shown in FIG. 6(c) is C that is another comparison model, and the model shown in FIG. 6(d) is D that is still another comparison model.

On these assumptions, it is possible to see that B and C are closer (or more similar) to A than D because the distance between A and B is calculated to be 0.1, the distance between A and C is calculated to be 0.1, and the distance between A and D is calculated to be 0.2.

In the method of sampling data according to an exemplary embodiment of the present invention, a comparison model having the minimum distance from an interest model is determined from a plurality of comparison models. Therefore, an equation for determining a sampling model may be expressed as Expression 6 below.

[Expression 6]

$$\min_{M_s} D_{EMD}(M_u, M_s) = \min_{M_s} \min_F WORK(M_u, M_s, F)$$

Here, $M_u$ denotes an interest model, and $M_s$ denotes a comparison model.

The apparatus for sampling data may calculate the distance between the interest model and a comparison model, and determine the comparison model as a sampling model when the calculated distance is the minimum distance. The apparatus for sampling data may repeat these processes for all the comparison models.

Meanwhile, in case 4, it is possible to calculate the distance between an interest model and a comparison model using a wavelet transform.

[Expression 7]

$$WEMD(P, Q) = \sum_{\lambda} \alpha_{\lambda} |W_{\lambda}(P - Q)|$$

Here, P denotes an interest model, Q denotes a comparison model, $W_{\lambda}(P - Q)$ denotes a wavelet transform coefficient of the difference "P - Q," and the sizes of $\lambda$ and $\alpha_{\lambda}$ depend on the aforementioned coefficient.

It has been described above that an interest model is generated, and then a comparison model is generated. However, it is possible to generate a comparison model first and then generate an interest model, or simultaneously generate an interest model and a comparison model.

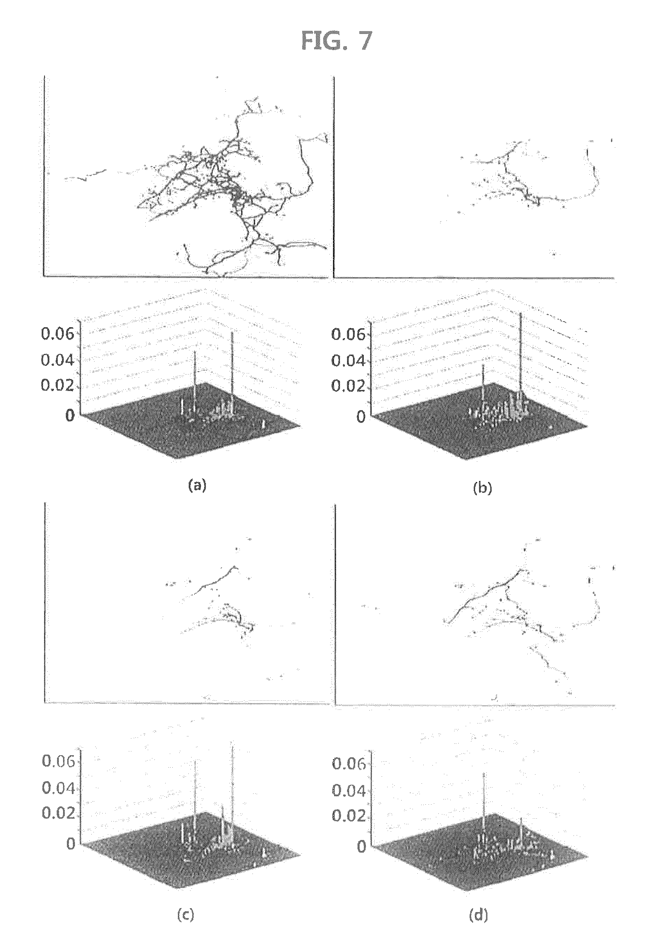

Thus far, the method of sampling data according to an exemplary embodiment of the present invention has been described in detail. With reference to FIGS. 7 to 9, it will be described below how much sampling results based on the method of sampling data according to an exemplary embodiment of the present invention reflect characteristics of raw data or an interest of a user.

FIG. 7 shows conceptual diagrams of sampling results according to sampling methods. FIG. 7(a) shows raw data, FIG. 7(b) shows sampling results calculated by random sampling, FIG. 7(c) shows sampling results calculated by traffic-preserving sampling, and FIG. 7(d) shows sampling results calculated by traffic-preserving sampling with a uniform weight,

From FIG. 7, it is possible to see that the preservation of the raw data (i.e., a traffic distribution) when calculating with traffic-preserving sampling in FIG. 7(c) is better than the preservation of the raw data when calculating with random sampling in FIG. 7(b). In other words, it is possible to see that the lower graph of FIG. 7(a) includes two large blocks having relatively heavy traffic, and blocks between the two large blocks have relatively low weights. Also, it is possible to see that this tendency is shown better by calculating with traffic-preserving sampling in FIG. 7(c) than calculating with random sampling in FIG. 7(b). In addition, from the upper diagrams of FIG. 7, it is possible to see that major traffic traces of the raw data when calculating with traffic-preserving sampling in FIG. 7(c) are reflected better than when calculating with random sampling in FIG. 7(b).

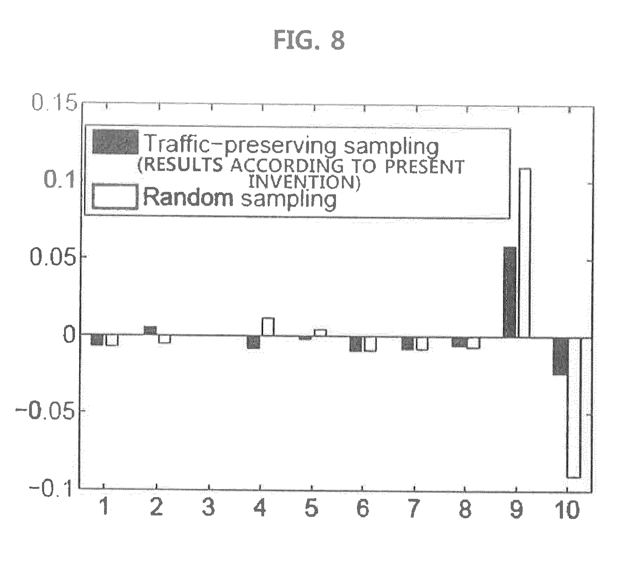

FIG. 8 is a conceptual diagram showing differences between raw data and sampling results according to sampling methods, in which the X-axis denotes a time window and the Y-axis denotes the sum of differences between traffic ratios at respective nodes. Here, it is possible to see that a difference between the raw data and sampling results based on the traffic-preserving sampling according to an exemplary embodiment of the present invention is smaller than a difference between the raw data and sampling results based on random sampling.

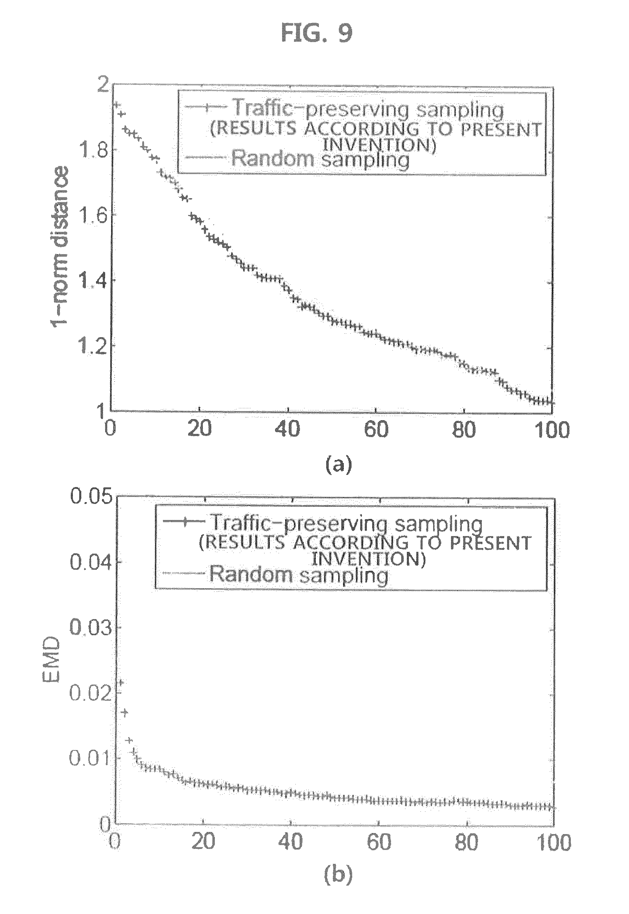

FIG. 9 shows graphs of a change in sampling quality according to sample size, in which the X-axis denotes sampling size and the Y-axis denotes the distance between raw data and each sampling model. FIG. 9(a) shows the distance between raw data and each sampling model calculated using the 1-norm distance, and it is possible to see that the distance between a traffic-preserving sampling model and the raw data is shorter than the distance between a random sampling model and the raw data. FIG. 9(b) shows the distance between raw data and each sampling model calculated using the EMD distance, and it is possible to see that the distance between a traffic-preserving sampling model and the raw data is shorter than the distance between a random sampling model and the raw data.

An apparatus for sampling data according to an exemplary embodiment of the present invention will be described in detail below.

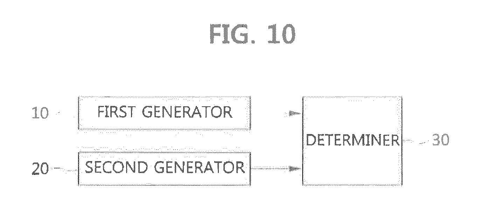

FIG. 10 is a block diagram of an apparatus for sampling data according to an exemplary embodiment of the present invention.

Referring to FIG. 10, the apparatus for sampling data according to an exemplary embodiment of the present invention includes a first generator 10 that generates an interest model reflecting an interest of a user based on raw data, a second generator 20 that generates a plurality of comparison models based on elements included in the raw data, and a determiner 30 that determines a sampling model according to results obtained by comparing the interest model with the plurality of comparison models.

The first generator 10 may classify the elements included in the raw data into a plurality of data groups based on the interest of the user, calculate the weights of the plurality of data groups according to a ratio between at least one element included in each of the plurality of data groups and at least one element included in another of the data groups, change the data groups into nodes defined according to the interest of the user, and calculate distances between the plurality of nodes. Here, details of the generation of the interest model by the first generator 10 are the same as described above in operation S100.

The second generator 20 may classify the elements included in the raw data into the plurality of data groups for the interest model, generate a plurality of comparison data groups based on at least one element included in the plurality of data groups, change the comparison data groups into comparison nodes defined according to the interest of the user, calculate the weights of the plurality of comparison nodes according to a ratio between at least one element included in each of the plurality of comparison nodes and at least one element included in another of the comparison nodes, and calculate distances between the plurality of comparison nodes. Here, details of the generation of the comparison models by the second generator 20 are the same as described above in operation S210.

The determiner 30 may calculate the distances between the interest model and the plurality of comparison models, and determine a comparison model having a distance meeting a previously defined standard among the calculated distances as the sampling model. Here, details of the calculation of the distances between the interest model and the comparison models by the determiner 30 are the same as described above in operation S220, and details of the determination of the sampling model are the same as described above in operation S230.

The functions performs by the first generator 10, the second generator 20, and the determiner 30 may be performed by an arbitrary processor (e.g., a central processing unit (CPU)), and the respective operations of FIGS. 1 to 3 may be performed by the arbitrary processor.

Also, the first generator 10, the second generator 20, and the determiner 30 may be implemented in one integrated form, one physical device, or one module. Moreover, each of the first generator 10, the second generator 20, and the determiner 30 may be implemented as a plurality of physical devices or groups instead of one physical device or group.

While the invention has been shown and described with reference to certain exemplary embodiments thereof, it will be understood by those skilled in the art that various changes in form and details may be made therein without departing from the spirit and scope of the invention as defined by the appended claims.

**Claims**

1. A method of sampling data performed by a data sampling apparatus, the method comprising:

    generating an interest model reflecting an interest of a user based on raw data; and
    determining a sampling model according to results obtained by comparing models sampled based on the raw data with the interest model.

2. The method of claim 1, wherein the generating of the interest model comprises:

    classifying elements included in the raw data into a plurality of data groups based on the interest of the user;
    calculating weights of the plurality of data groups according to a ratio between at least one element included in each of the plurality of data groups and at least one element included in another of the data groups;
    changing the data groups into nodes defined according to the interest of the user; and
    calculating distances between the plurality of nodes.

3. The method of claim 2, wherein the determining of the sampling model comprises:

    generating a plurality of comparison models based on the elements included in the raw data;
    calculating distances between the interest model and the plurality of comparison models; and
    determining a comparison model having a distance meeting a previously defined standard among the calculated distances as the sampling model.

4. The method of claim 3, wherein the generating of the plurality of comparison models comprises:

    classifying the elements included in the raw data into the plurality of data groups for the interest model;
    generating a plurality of comparison data groups based on at least one element included in the plurality of data groups;
    changing the comparison data groups into comparison nodes defined according to the interest of the user;
    calculating weights of the plurality of comparison nodes according to a ratio between at least one element included in each of the plurality of comparison nodes and at least one element included in another of the comparison nodes; and

calculating distances between the plurality of comparison nodes.

5. An apparatus for sampling data, comprising:

a first generator configured to generate an interest model reflecting an interest of a user based on raw data;

a second generator configured to generate a plurality of comparison models based on elements included in the raw data; and

a determiner configured to determine a sampling model according to results obtained by comparing the interest model with the plurality of comparison models.

6. The apparatus of claim 5, wherein the first generator classifies the elements included in the raw data into a plurality of data groups based on the interest of the user, calculates weights of the plurality of data groups according to a ratio between at least one element included in each of the plurality of data groups and at least one element included in another of the data groups, changes the data groups into nodes defined according to the interest of the user, and calculates distances between the plurality of nodes.

7. The apparatus of claim 6, wherein the second generator classifies the elements included in the raw data into the plurality of data groups for the interest model, generates a plurality of comparison data groups based on at least one element included in the plurality of data groups, changes the comparison data groups into comparison nodes defined according to the interest of the user, calculates weights of the plurality of comparison nodes according to a ratio between at least one element included in each of the plurality of comparison nodes and at least one element included in another of the comparison nodes, and calculates distances between the plurality of comparison nodes.

8. The apparatus of claim 5, wherein the determiner calculates distances between the interest model and the plurality of comparison models, and determines a comparison model having a distance meeting a previously defined standard among the calculated distances as the sampling model.

# FIG. 1

( START )

GENERATE INTEREST MODEL REFLECTING
INTEREST OF USER BASED ON RAW DATA ── S100

DETERMINE SAMPLING MODEL ACCORDING TO
RESULTS OBTAINED BY COMPARING INTEREST
MODEL WITH MODELS SAMPLED BASED ON
RAW DATA ── S200

( END )

# FIG. 2

CLASSIFY ELEMENTS INCLUDED IN
RAW DATA INTO PLURALITY OF
DATA GROUPS ── S110

CALCULATE WEIGHTS OF PLURALITY
OF DATA GROUPS ── S120

── S100

CHANGE DATA GROUPS INTO
NODES ── S130

CALCULATE DISTANCES BETWEEN
PLURALITY OF NODES ── S140

FIG. 3

```
┌─────────────────────────────────┐
│  CLASSIFY ELEMENTS INCLUDED IN   │──── S211
│  RAW DATA INTO DATA GROUPS       │
└─────────────────────────────────┘
                 │
                 ▼
┌─────────────────────────────────┐
│  GENERATE COMPARISON DATA        │──── S212
│  GROUPS BASED ON DATA GROUPS     │
└─────────────────────────────────┘        S210
                 │
                 ▼
┌─────────────────────────────────┐
│  CHANGE COMPARISON DATA          │──── S213
│  GROUPS INTO COMPARISON NODES    │
└─────────────────────────────────┘
                 │                              S200
                 ▼
┌─────────────────────────────────┐
│  CALCULATE WEIGHTS OF            │──── S214
│  COMPARISON NODES                │
└─────────────────────────────────┘
                 │
                 ▼
┌─────────────────────────────────┐
│  CALCULATE DISTANCES BETWEEN     │──── S215
│  PLURALITY OF COMPARISON NODES   │
└─────────────────────────────────┘
                 │
                 ▼
┌─────────────────────────────────┐
│  CALCULATE DISTANCES BETWEEN     │
│  INTEREST MODEL AND COMPARISON   │──── S220
│  MODELS                          │
└─────────────────────────────────┘
                 │
                 ▼
┌─────────────────────────────────┐
│  DETERMINE SAMPLING MODEL        │──── S230
│  BASED ON CALCULATED DISTANCES   │
└─────────────────────────────────┘
```

FIG. 4

(a)

(b)

## FIG. 5

(a)

(b)

(c)

FIG. 6

(a)

(b)

(c)

(d)

FIG. 7

(a)

(b)

(c)

(d)

FIG. 8

## FIG. 9

(a)

(b)

FIG. 10

## INTERNATIONAL SEARCH REPORT

| | International application No. |
|---|---|
| | **PCT/KR2013/002700** |

**A. CLASSIFICATION OF SUBJECT MATTER**

*G06F 17/00(2006.01)i*

According to International Patent Classification (IPC) or to both national classification and IPC

**B. FIELDS SEARCHED**

Minimum documentation searched (classification system followed by classification symbols)

G06F 17/00; G06Q 50/10; G06Q 10/10; G06F 17/16; G06Q 30/02; G06Q 50/10; G06Q 50/00; H04B 1/40

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: Mining, sampling, extraction, interest, comparison.

**C. DOCUMENTS CONSIDERED TO BE RELEVANT**

| Category* | Citation of document, with indication, where appropriate, of the relevant passages | Relevant to claim No. |
|---|---|---|
| A | KR 10-2009-0100326 A (BIZMODELINE CO., LTD.) 23 September 2009<br>See paragraphs [0012], [0021]-[0023] and [0048]; and claim 1. | 1-8 |
| A | KR 10-2011-0090354 A (KOREA UNIVERSITY RESEARCH AND BUSINESS FOUNDATION) 10 August 2011<br>See paragraphs [0010]-[0011] and [0060]; claims 1-3 and 7; and figure 1. | 1-8 |
| A | KR 10-2011-0028067 A (SAMSUNG ELECTRONICS CO., LTD.) 17 March 2011<br>See paragraphs [0020]-[0024]; claims 1, 3, 5, 7 and 9; and figure 1. | 1-8 |
| A | KR 10-2008-0078930 A (CHUTNOON CO., LTD.) 29 August 2008<br>See paragraphs [0020] and [0025]-[0026]; claims 1-4; and figure 1. | 1-8 |
| A | KR 10-2002-0007742 A (OZTECHNOLOGIES INC. et al.) 29 January 2002<br>See claims 1-4; and figure 1. | 1-8 |
| A | US 2003-0074142 A1 (STEEG, Evan W.) 17 April 2003<br>See paragraphs [0069]-[0074] and [0242]-[0244]; and claim 6. | 1-8 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 JULY 2013 (30.07.2013) | **31 JULY 2013 (31.07.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/002700**

| Patent document cited in search report | Publication date | Patent family member | Publication date |
|---|---|---|---|
| KR 10-2009-0100326 A | 23/09/2009 | KR 10-2004-0082017 A | 23/09/2004 |
| KR 10-2011-0090354 A | 10/08/2011 | EP 2533430 A2 | 12/12/2012 |
| | | KR 10-1095069 B1 | 20/12/2011 |
| | | US 2013-0073569 A1 | 21/03/2013 |
| | | WO 2011-096690 A2 | 11/08/2011 |
| | | WO 2011-096690 A3 | 15/12/2011 |
| KR 10-2011-0028067 A | 17/03/2011 | NONE | |
| KR 10-2008-0078930 A | 29/08/2008 | JP 2008-176782 A | 31/07/2008 |
| | | KR 10-0856916 B1 | 05/09/2008 |
| KR 10-2002-0007742 A | 29/01/2002 | NONE | |
| US 2003-0074142 A1 | 17/04/2003 | AU 6816998 A | 20/10/1998 |
| | | CA 2285058 A1 | 01/10/1998 |
| | | CA 2285058 C | 01/06/2004 |
| | | EP 0968477 A1 | 05/01/2000 |
| | | IL 131843 A | 20/06/2004 |
| | | IL 131843 D0 | 19/03/2001 |
| | | JP 2001-519070 A | 16/10/2001 |
| | | US 06493637 B1 | 10/12/2002 |
| | | WO 1998-043182 A1 | 01/10/1998 |

Form PCT/ISA/210 (patent family annex) (July 2009)